# EUROPEAN PATENT SPECIFICATION

(11) **EP 2 796 351 B1**
(45) Date of publication and mention of the grant of the patent: **06.10.2021**
(21) Application number: 12858988.4
(22) Date of filing: 17.12.2012
(51) Int. Cl.: B62K 11/10, B60L 53/16

(54) **SADDLED ELECTRIC VEHICLE**
ELEKTROFAHRZEUG MIT SATTEL
VÉHICULE ÉLECTRIQUE À SELLE

(30) Priority: 22.12.2011 JP 2011280757; 04.12.2012 JP 2012265126
(43) Date of publication of application: 29.10.2014
(73) Proprietor: Yamaha Hatsudoki Kabushiki Kaisha, Iwata-shi, Shizuoka 438-8501 (JP)
(72) Inventor: MIYASHIRO Shidehiko, Iwata-shi Shizuoka 438-8501 (JP)
(74) Representative: Grünecker Patent- und Rechtsanwälte PartG mbB
(86) International application number: PCT/JP2012/082649
(87) International publication number: WO 2013/094558

(56) References cited:
- EP-A2- 2 236 403
- EP-A2- 2 295 316
- WO-A1-2011/024326
- JP-A- H0 583 863
- JP-A- H04 358 980
- JP-A- H06 141 407
- JP-A- 2011 063 074
- JP-A- 2011 063 074
- US-A1- 2010 315 040
- None

## Description

The present invention relates to a straddle-type electric vehicle according to the preamble of independent claim 1. Such a straddle-type electric vehicle can be taken from the prior art document EP 2 295 316 A2.

An electric motorcycle which uses an electric motor as a drive source includes a receptacle for charging a battery. When the battery is charged, a plug which is provided at an end portion of a cable which extends from a charger is connected with the receptacle.

As an electric motorcycle of this type, there is known one in which a receptacle for charging the battery is provided within an accommodation box provided below a seat face and is covered by a side cover (for example, refer to Patent Literature 1).

Further, recently, lots of charging stations for charging electric cars have been located. The charging station is provided with a gun-type plug having a plug portion to which the receptacle of the electric car is connected and a grip portion (for example, refer to Patent Literature 2).

Between the gun-type plug and the receptacle, it is necessary to connect plural electric wires mutually, such as cathodes, anodes and control signal lines. The gun-type plug is designed so that the gun-type plug is not connected with the receptacle unless a rotational position about an insertion/drawing direction of the plug matches predetermined position. Once the user grips the grip portion, the user can easily change a direction of the gun-type plug freely and easily match the mutual rotational positions. Further, after the rotational positions are matched each other, by putting the gun-type plug thereto, while leaving its posture as it is, the gun-type plug is electrically connected with the receptacle. Thus, the gun-type plug is easy to perform connecting work.

### Related Art Literature

### Patent Literature

Patent Literature 1: Japanese Unexamined Patent Publication No. 2011-63066
Patent Literature 2: Japanese Unexamined Patent Publication No. H07-201408

### Summary of the Invention

### Problem that the Invention is to Solve

Then, it is conceivable to adopt the gun-type plug which is easy to perform connecting work to the electric motorcycle.

However, the receptacle of the electric motorcycle is provided at a position lower than the receptacle of the electric car. Therefore, during charge, the charging plug is left in a state in which the plug is connected with the receptacle which is located at a lower position of the vehicle. The charging time is required more than 30 minutes, and the charging plug is located at the lower position, for an example, other vehicle which comes thereto overlooks the charging plug and contacts with the charging plug unintentionally.

Then, an object of the invention is to provide a straddle-type electric vehicle which is able to use the gun-type plug which is easy to perform connecting work and also suppresses influence on surrounding during charge to the utmost.

According to the present invention said object is solved by a straddle-type electric vehicle having the features of independent claim 1. Preferred embodiments are laid down in the dependent claims.

Accordingly, there is provided a straddle-type electric vehicle including:
a front wheel and a rear wheel;
a seat at least part of which is, with respect to the vehicle, provided forward of the rear wheel;
a body cover having:
   a foot rest portion which is provided between the front wheel and the rear wheel and which supports feet of an occupant who is seated on the seat from therebelow; and
   a leg shield which is provided between the foot rest portion and the front wheel and which has a surface extending in an up-and-down direction; and
a receptacle to which a gun-type plug having a plug portion and grip portion is connectable and which is provided in a position facing an opening portion,
wherein the opening portion is provided on the body cover in a position which is within a width of the leg shield in a left-and-right direction of the vehicle and between the leg shield and the rear wheel in a front-and-rear direction of the vehicle,
the receptacle is provided so that a connection port to which a gun-type plug is inserted faces upward, and
the receptacle is provided so that at least a part of a grip portion of a gun-type plug is, with respect to the vehicle, positioned leftward of a plug portion of a gun-type plug when a gun-type plug is connected with the receptacle.

According to the straddle-type electric vehicle of the invention, the receptacle is provided in a position which is within a width of the leg shield in the left-and-right direction of the vehicle and between the leg shield and the rear wheel in the front-and-rear direction and is provided in a position facing the opening portion. The connection port faces upward. The receptacle is provided so that at least a part of the grip portion of the gun-type plug is, with respect to the vehicle, positioned leftward of the plug portion when the gun-type plug is connected with the receptacle. Thus, even for the straddle-type vehicle in which the receptacle is arranged in a lower position, the occupant who gets off the left side of the vehicle connects the gun-type plug with the receptacle, and thus the connecting work is easy.

Further, the gun-type plug having the plug portion and the grip portion is connectable with the receptacle. The opening portion to which the receptacle facing is provided in a space which is within the width of the leg shield in the left-and-right direction of the vehicle and between the leg shield and the rear wheel in the front-and-rear direction which is a space in which the occupant rest his/her foot normally. Thus, even in a case that it is arranged so that the connecting work of the gun-type plug becomes easy, the space in which the occupant rest his/her foot at normal time is utilized, the protrusion amount of the gun-type plug protruding sideward is suppressed when the gun-type plug is connected with the receptacle.

As such, according to the aspect of the invention, the work to connect the gun-type plug with the receptacle becomes easy and there is little fear that the other vehicle contacts with the plug during charge and thus, there is provided a straddle-type electric vehicle which suppresses an adverse influence on the surrounding.

In the straddle-type electric vehicle of the invention, it is adoptable that the receptacle is provided so that a grip portion of a gun-type plug extends obliquely with respect to left direction of the vehicle when a gun-type plug is connected with the receptacle.

According to the straddle-type electric vehicle, the grip portion does not extend leftward of the vehicle directly, but extends obliquely. Thus, the protrusion amount of the gun-type plug protruding sideward of the vehicle is further suppressed. Accordingly, it is further suppressed that the other vehicle contacts with the gun-type plug during charge.

Further, in the straddle-type electric vehicle according to the invention, it is adoptable that the receptacle is provided forward of the seat, and the receptacle is provided so that at least a part of a grip portion of a gun-type plug is, with respect to the vehicle, positioned rearward diagonal left of a plug portion of a gun-type plug when a gun-type plug is connected with the receptacle.

According to the straddle-type electric vehicle of the invention, the gun-type plug connected with the receptacle does not interfere with the seat. Thus, there is provided the straddle-type electric vehicle in which the connecting work of the gun-type plug to the receptacle is easy.

Further, in a not claimed straddle-type electric vehicle, it is adoptable that the receptacle is provided rearward of the foot rest portion, and the receptacle is provided so that at least a part of a grip portion of a gun-type plug is, with respect to the vehicle, positioned forward diagonal left of a plug portion of a gun-type plug when a gun-type plug is connected with the receptacle.

According to the straddle-type electric vehicle, the gun-type plug connected with the receptacle does not interfere with the seat. Thus, there is provided the straddle-type electric vehicle in which the connecting work of the gun-type plug to the receptacle is easy.

Further, in the straddle-type electric vehicle according to the invention, it is adoptable that the receptacle is provided so that at least a part thereof is positioned rightward of a vehicle center.

According to the straddle-type electric vehicle, the entire of the gun-type plug is accommodated within the width of the leg shield in the left-and-right direction of the vehicle. Thus, there is provided the straddle-type electric vehicle in which the adverse influence on the surrounding is further suppressed.

Further, in the straddle-type electric vehicle according to the invention, it is adoptable that the straddle-type electric vehicle further includes a cover portion which is provided between the leg shield and the seat and upward of the foot rest portion, and at least a part thereof is positioned between left and right foot rest portions in a width direction of the vehicle in a plan view and the opening portion is provided on the cover portion.

According to the straddle-type electric vehicle, the gun-type plug can be disposed between the left and right foot rests and there is provided the straddle-type electric vehicle in which the adverse influence on the surrounding is further suppressed.

### Brief description of the drawings

Fig. 1 is a side view of a straddle-type electric vehicle according to a first embodiment of the invention.
Fig. 2 is an enlarged top view of the vicinity of a receptacle of the straddle-type electric vehicle shown in Fig. 1 as viewed in a direction indicated by an arrow II.
Fig. 3 is a perspective view of a gun-type plug which is connectable to the receptacle shown in Fig.2.
Fig. 4 is a side of the straddle-type electric vehicle shown in Fig.1 showing a state in which the gun-type plug is connected thereto.
Fig. 5 is a top view of the straddle-type electric vehicle shown in Fig. 4 as viewed in a direction indicated by an arrow V showing a state in which the gun-type plug is connected thereto.
Fig. 6 is an enlarged side of the receptacle, (a) shows a state in which a cap is closed, (b) shows a state in which the cap is opened and (c) shows a state in which the gun-type plug is connected.
Fig. 7 is an enlarged side of the receptacle of a straddle-type electric vehicle according to a second embodiment, (a) shows a state in which a cap is closed, (b) shows a state in which the cap is opened and (c) shows a state in which the gun-type plug is connected thereto.
Fig. 8 is a top view of a straddle-type electric vehicle according to a third embodiment of the invention.
Fig. 9 is a top view showing a state in which the gun-type plug is connected with the receptacle of the straddle-type electric vehicle shown in Fig. 8.
Fig. 10 is a side view of a straddle-type electric vehicle according to a fourth not claimed embodiment.
Fig. 11 shows a straddle-type electric vehicle according to a fifth embodiment of the present invention, (a) is a side view and (b) is a top view of the receptacle.

### Mode for carrying out the invention

The inventors focus on a point in which a gun-type plug is easy to change its direction freely by gripping a grip portion thereof, it is easy to match mutual rotational positions and it is easy to insert into a receptacle after matching mutual positions. The inventors consider applying such a gun-type plug which is easy to connect to a straddle-type electric vehicle for enhancing convenience of the users.

However, the inventors found that because the gun-type plug has a plug portion and the grip portion and therefore a size of the plug is large, when applying the gun-type plug thereto, following problem may be occurred.

The receptacle of the straddle-type electric vehicle is generally provided at a position lower than that of a receptacle of an electric motorcycle. Further, simply mounting the receptacle on the straddle-type electric vehicle, the gun-type plug tends to protrude outward of the vehicle during charge. Furthermore, because the straddle-type electric vehicle is small relative to the electric car, it is able to be parked in a narrow space between neighboring two straddle-type vehicles.

For this reason, during charging by using the gun-type plug, when the other straddle-type electric vehicle attempts to park in the narrow space neighboring to the straddle-type electric vehicle which is being charged, the gun-type plug is overlooked and the other vehicle unintentionally contacts with the gun-type plug. Thus, there is a fear that the charge may be interrupted.

Then, the inventors invent so as to provide a straddle-type electric vehicle in which the convenience of the user is enhanced by using the gun-type plug and has no fear of contacting with the other vehicle during charge.

Note that the above problem is not occurred in an electric motorcycle which does not use the gun-type plug as recited in Patent Literature 1. Because, to begin with, in Patent Literature 1, the plug is small, a space to which the plug is inserted can be assured under a seat cover of a vehicle. As such, the plug is inserted under the seat cover, the plug does not protrude outward of the vehicle. For this reason, the above problem is not occurred in the electric motorcycle which does not use the gun-type plug.

### (First embodiment)

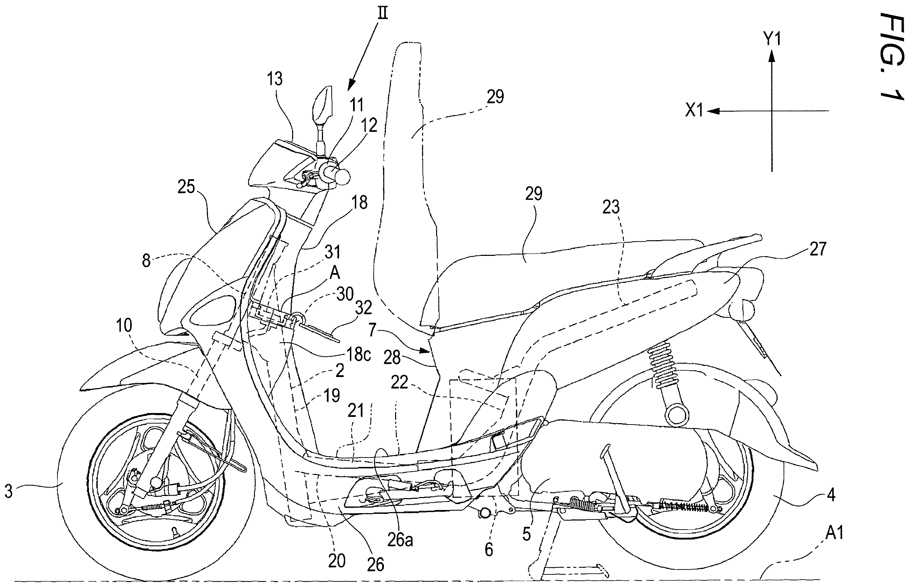

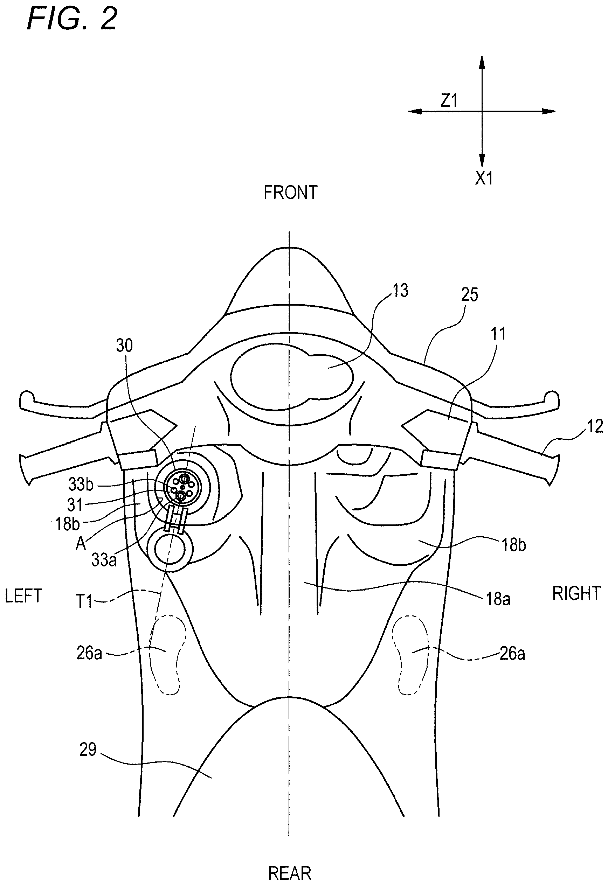

Hereinafter, referring to the drawings, a first embodiment of the invention will specifically be described. Fig. 1 is a left side view of a straddle-type electric motorcycle which is a straddle-type electric vehicle of the first embodiment of the invention. Fig. 2 is an enlarged top view of the vicinity of receptacle of the straddle-type electric vehicle shown in Fig. 1 as viewed in a direction indicated by an arrow II.

It is noted that in the following description, directions denoted as front, rear, top, bottom, left and right are based on a viewing direction of a rider who rides on an electric motorcycle disposed on a horizontal plane, and who faces a forward traveling direction. In Fig. 1, a front direction is denoted by an arrow X1 and an up-and-down direction is denoted by an arrow Y1. In Fig. 2, a left-and-right direction is denoted by an arrow Z1. In addition, the configuration of the electric motorcycle will be described based on the electric motorcycle which is parked in an upright erected state with a main stand is rotated downward.

The electric motorcycle includes a body frame 2, a front wheel 3, a rear wheel 4, a power unit 5 which installs an electric motor, a battery 6, a body cover 7 and a seat 29. In the electric motorcycle, the electric motor is driven by electric power supplied from the battery 6, and the rear wheel 4 is driven by an output of the electric motor. Hereinbelow, an overall construction of the electric motorcycle will be described sequentially from the front of a body thereof.

The electric motorcycle has a head pipe 8 which is disposed at a top front portion of the electric motorcycle. A steering shaft is turnably inserted into the head pipe 8. A pair of left and right front forks is mounted at a lower end portion of the steering shaft. The front wheel 3 is mounted to the front forks 10.

A handlebar 11 is mounted at an upper end portion of the steering shaft. The rider is able to turn the steering shaft, the front forks 10 and the front wheel 3 about an axis of the steering shaft by controlling the handlebar 11.

Grips 12 are provided individually at both left and right end portions of the handlebar 11 (a left grip only is shown) . A right-hand grip makes up a throttle grip. The rider is able to turn this throttle grip to control an output of the electric motor. Additionally, a meter 13 is provided near a center of the handlebar 11.

The electric motorcycle includes the body frame 2 which extends rearward from the head pipe 8. The body frame 2 is formed by using steel tube members. The body frame 2 includes a down tube 19 and a frame main body 20 which is disposed rearward of the down tube 19. The down tube 19 extends rearward diagonal lower from a lower portion of the head tube 8. As viewed from the side thereof, the frame main body 20 extends rearward from a lower end portion of the down tube 19, and an intermediate portion of the down tube 19 in the front-and-rear direction X1 of the vehicle is formed into an S-shape.

The frame main body 20 includes a pair of left and right frame main bodies 20, each frame main body 20 including a first frame portion 21, a second frame portion 22 and a third frame portion 23.

The first frame portion 21 extends substantially straight rearward from the lower end portion of the down tube 19 and is slightly inclined rearward diagonal upper. A side stand is mounted to the first frame portion 21.

The second frame portion 22 is formed into an S-shape as viewed from the side thereof. The second frame portion 22 is curved from bottom to top. A front end of the second frame portion 22 continues from a rear end portion of the first frame portion 21, an intermediate portion of the second frame portion 22 extends straight rearward diagonal upper, and a rear end portion thereof continues to the third frame portion 23. When viewed from the side thereof, an inclination angle of the intermediate portion of the second frame portion 22 relative to the first frame portion 21 is, for example, on the order of 45 degrees. The third frame portion 23 extends in a straight line from an upper end portion of the second frame portion 22 and is inclined rearward diagonal upper.

As shown in Fig. 1, the electric motorcycle includes the body cover 7 which is mounted on the body frame 2. The body cover 7 includes a front cover 25 which covers the head pipe 8, a leg shield 18, a bottom cover 26, a rear cover 27 and an under-seat cover 28. The body cover 7 is a cover constituting an outer surface of the electric motorcycle.

The bottom cover 26 extends rearward from a lower portion of the front cover 25 to thereby cover the first frame portion 21. Foot rest portions 26a are formed at an upper end portion of the bottom cover 26 which is provided between the front wheel 3 and the rear wheel 4. The foot rest portions 26a are formed substantially flat and support feet of the rider who is seated on the seat 29 from therebelow.

The leg shield 18 is provided between the foot rest portions 26a and the front wheel 3 and has a surface which extends in the up-and-down direction. This leg shield 18 covers the down tube 19 together with the front cover 25. The leg shield 18 is formed so as to continue from the rear side of the front cover 25 to the foot rest portions 26a.

As shown in Fig. 2, the leg shield 18 has a frame covering portion 18a at a center in the left-and-right direction of the vehicle and leg protecting portions 18b which are provided at the left and right of the frame covering portion 18a. The leg protecting portions 18b are provided individually at left and right end portions of the leg shield 18 so as to protect legs of the rider who is seated on the seat 29. The frame covering portion 18a is formed in a shape in which it projects rearward from the leg protecting portions 18b so as to cover the down tube 19 which extends rearward diagonal lower from the head tube 8.

Additionally, as shown in Fig. 1, the rear cover 27 covers the second frame portion 22 and the third frame portion 23. The rear cover 27 has a shape as a whole in which it extends rearward diagonal upper from a rear portion of the bottom cover 26. The rear cover 27 covers from an intermediate portion of the second frame portion 22 to the third frame portion 23 from left and right sides thereof.

The under-seat cover 28 is formed so as to rise from the rear portion of the bottom cover 26 below the seat 29 and at the front of the rear cover 27.

The seat 29 is disposed above the under-seat cover 28 and the rear cover 27. A front portion of the seat 29 is, with respect to the vehicle, provided forward of the rear wheel 4. While the electric motorcycle is running, the feet of the rider who is seated on the seat 29 rest on the foot rest portions 26a. In the front-and-rear direction X1, the foot rest portions 26a are disposed between the leg shield 18 and the under-seat cover 28.

Additionally, the seat 29 is mounted on the under-seat cover 28 via a hinge at a front portion thereof, whereby a storage space provided below the seat 29 can be opened and closed by the seat 29.

The battery 6, which functions as a power supply for the electric motor, is disposed below the seat 29. The battery 6 is disposed between the pair of left and right second frame portions 22. The battery 6 is a secondary battery which is rechargeable. It is noted that the battery 6 may be configured so as to be detached from the vehicle.

In addition, the power unit 5 is provided rearward of the first frame portion 21 and below the third frame portion 23. The power unit 5 is mounted on the third frame portion 23 so as to swing via a suspension unit. A main stand is mounted at a lower portion of the power unit 5.

### (Receptacle)

In the electric motorcycle configured in the way described above, a receptacle 30 which is to be electrically connected with the battery 6 is provided between the front cover 25 and the leg shield 18. The receptacle 30 has a connecting port 31 into which a plug portion 42 of a gun-type plug 40 which is described later can be inserted. The receptacle 30 is provided so that the connecting port 31 faces an opening portion A which is provided in the leg shield 18. The receptacle 30 may be fitted to a down tube 19 or may be fitted to the body cover 7.

Further, a cap 32 is provided on the receptacle 30 so as to close the connecting port 31. When charging is not carried out, the cap 32 covers the connecting port 31 to thereby prevent the intrusion of rain water or dust into an interior of the receptacle 30.

As shown in Fig. 2, a receptacle accommodating portion 18c is provided on the left-side leg protecting portion 18b of the leg shield 18 so as to project rearward from the leg protecting portion 18b. An upper surface of the receptacle accommodating portion 18c is formed into a flat plane facing upward. The opening portion A is provided in the receptacle accommodating portion 18c.

That is, the opening portion A is provided in a position which is within a width of the leg shield 18 in a left-and-right direction Z1 of the vehicle. Further, the receptacle 30 facing the opening portion A is provided in an interior of the receptacle accommodating portion 18c in a state that the connecting port faces upward.

The receptacle 30 includes seven male terminals 33a, 33b. These seven male terminals 33a, 33b are exposed to the connecting port 31. At this connecting port 31, these seven male terminals 33a, 33b are provided in vertex positions of regular hexagon and its center position.

These male terminals 33a, 33b are respectively connected with two direct current power lines (cathode and anode), an earth line, two interface lines and two communication lines. The interface line electrically detects connection between the gun-type plug 40 and the receptacle 30. The communication line communicates control signals between a battery charger connected with the gun-type plug 40 and the battery 6 connected with the receptacle 30.

In the seven male terminals 33a, 33b, the two male terminals 33a are made thick with respect to the other four male terminals 33b. The two thick male terminals 33a are, as shown, arranged in the front-and-rear direction of the vehicle. In detail, as viewed from top of the vehicle as shown in Fig. 2, the male terminal 33a positioned rearward is located leftward of the male terminal 33a positioned forward.

Note that, in the following descriptions, for convenience of explanation, a direction indicated by a line segment connecting these two thick male terminals 33a in Fig. 2 is called as a receptacle-side terminal arrange direction T1. Namely, the receptacle-side terminal arrange direction T1 is slanted rearward diagonal left with respect to the front-and-rear direction X1 of the vehicle.

### (gun-type plug)

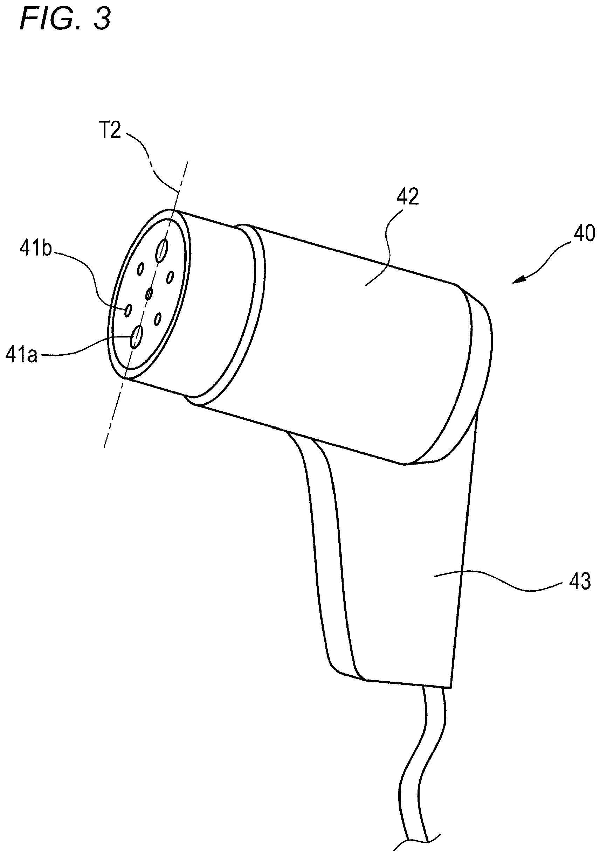

Fig. 3 is a perspective view showing the gun-type plug 40 which is connectable to the receptacle 30. The gun-type plug 40 includes a plug portion 42 having female terminals 41a, 41b which are to be connected with the male terminals 33a, 33b of the receptacle 30, and a grip portion 43 which is used as a handle.

The plug portion 42 is a cylindrical portion formed by extending along with an insertion direction to the receptacle 30. In an interior of the plug portion 42, plural (seven in the shown example) female terminals 41a, 41b are provided so as to extend in a longitudinal direction of the plug portion 42. These female terminals are exposed to a tip of the plug portion 42.

Further, the seven female terminals 41a, 41b are respectively provided in vertex positions of a regular hexagon and its center position. In these seven female terminals 41a, 41b, the two female terminals 41a are set thicker with respect to the other four female terminals 41b. A direction indicated by a line segment connecting these two thick female terminals 41a is call as a plug-side terminal arrange direction T2.

Further, the grip portion 43 extends rearward diagonally with respect to the plug portion 42 so as to be slant with respect to the longitudinal direction of the plug portion 42. The grip portion 43 protrudes from the plug portion 42 in the plug-side terminal arrange direction T2. For this reason, when the user handles the gun-type plug 40, a direction of the gun-type plug 40 is naturally determined so that the grip portion 43 is positioned lower than the plug portion 42. In this direction, the two thick female terminals 41a, 41b are arranged in the up-and-down direction and the plug-side terminal arrange direction T2 becomes the up-and-down direction.

### (connecting state between gun-type plug and receptacle)

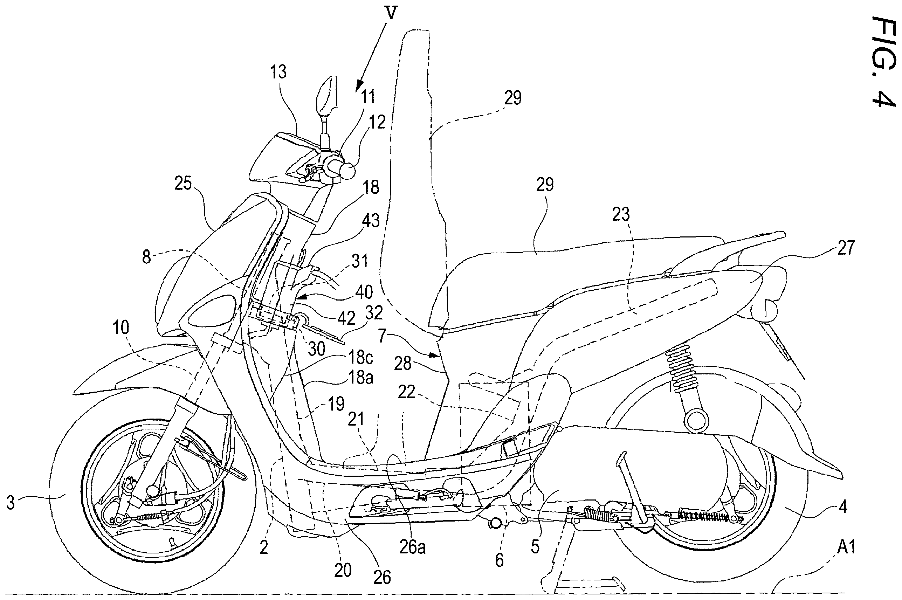

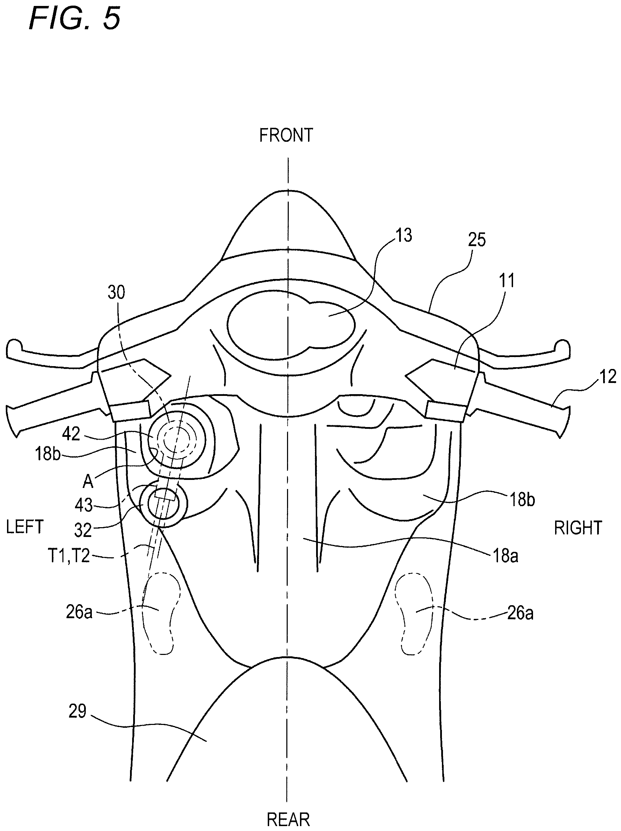

Fig. 4 is a side view showing a state in which the gun-type plug 40 is connected with the receptacle 30. Fig.5 is a top view as viewed from an arrow V in Fig. 4 showing the state in which the gun-type plug 40 is connected with the receptacle 30. In the electric motorcycle according to this embodiment, the gun-type plug 40 is connected with the receptacle 30 to thereby charge the battery 6.

As shown in Fig. 4, when the gun-type plug 40 is connected with the receptacle 30, because the connecting port 31 of the receptacle 30 faces upward, a rear end of the plug 42 of the gun-type plug 40 protrudes upward.

Further, as shown in Fig. 5, the grip portion 43 positions leftward of the plug portion 42. This is because the receptacle 30 is provided so that the receptacle terminal arrange direction T1 is slant rearward diagonal left with respect to the front-and-rear direction of the vehicle. For this reason, the gun-type plug 40 is inserted to the receptacle 30 in a posture in which the grip portion 43 is leftward of the plug portion 42 so that the plug-side terminal arrange direction T2 matches the receptacle-side terminal arrange direction T1.

As such, the receptacle 30 is provided so that, when the gun-type plug 40 is connected with the receptacle 30, at least a part of the grip portion 43 is, with respect to the vehicle, positioned leftward of the plug portion 42. For this reason, there is no fear that the gun-type plug 40 interferes with the leg shield 18 and thus, the connecting work of the gun-type plug 40 is easy.

Further, as shown in Fig. 5, the entire of the gun-plug 40 is accommodated in a space which is within a width of the leg shield 18 in the left-and-right direction Z1 of the vehicle and between the leg shield 18 and the rear wheel 4 in the front-and-rear direction of the vehicle and to which the foot of the occupant who seated on the seat 29 at the time of driving is provided. Therefore, a protrusion amount of the gun-type plug 40 which protrudes sideward of the vehicle can be suppressed. In particular, in this embodiment, the grip portion 43 of the gun-type plug 40 does not protrude sideward from this space, and thus there is no fear to give adverse influence on surrounding during charge.

Further, the space to which the leg of the occupant is provided is, originally, made empty for accommodating the leg of the occupant. Further, during charge, the occupant does not seat on the seat 29 and the space is available to accommodate the gun-type plug. Therefore, it is not necessary to assure further space for accommodating the gun-type plug 40, and the limited spaces in the electric motorcycle can be effectively utilized.

Note that the space to which the leg of the occupant is provided is, a concept which does not mean only the space in which the leg of the occupant exist in riding state, but the concept which includes the space to which the leg is passed when the occupant get on and off. That is, the space above the foot rest portions 26a and also the space between the left and right foot rest portions 26a can be used as the space in which the gun-type plug 40 is accommodated during charge. This case, too, it is unnecessary to assure further space for accommodating the gun-type plug 40.

Further, in the electric motorcycle according to this embodiment,
in a state in which the gun-type plug 40 is connected with the receptacle 30, the grip portion 43 is positioned rearward diagonal left with respect to the plug portion 42 of the gun-type plug 40. The user who starts charging work stands the vicinity of the seat 29 at left side of the vehicle.

At this time, the user holds the gun-type plug 40 so that the grip portion 43 is positioned at a side close to his/her body and the plug portion 42 is positioned at a side far from his/her body. Accordingly, when the user brings the gun-type plug 40 close to the receptacle 30, naturally, the grip portion 43 is positioned rearward diagonal left of the plug portion 42. Thus, the connecting work of the gun-type plug 40 to the receptacle 30 is easy.

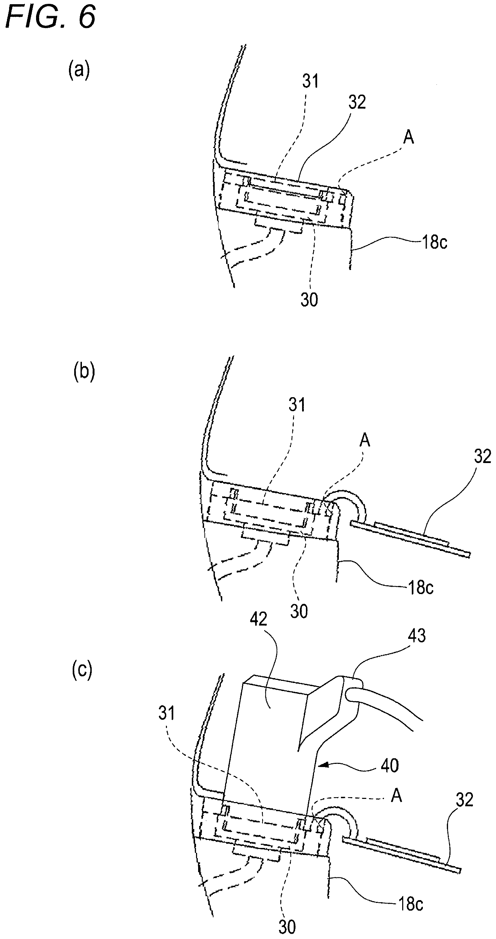

Fig. 6 is an enlarged side view of the receptacle 30, (a) shows a state in which a cap 32 is closed, (b) shows a state in which the cap 32 is opened and (c) shows a state in which the gun-type plug 40 is connected thereto.

In this embodiment, as shown in (c) of Fig. 6, the gun-type plug 40 is connected with the receptacle 30 so that the plug portion 42 extends rearward diagonal upper of the receptacle 30. For this reason, the user connects the gun-type plug 40 to the receptacle 30 by inserting the gun-type plug 40 to the receptacle 30 from top of the vehicle in the forward diagonal upper direction. Accordingly, the user who starts the charging work while standing the vicinity of the seat 29 can easily recognize the connecting port and thus the connect starting work is easy.

Further, in this embodiment, the opening portion A is provided in the body cover 7 which makes up the outer surface of the electric motorcycle. Thus, comparing with a case where the receptacle is provided below the seat, the access to the receptacle from outside of the vehicle is easy and the charging work is easy.

Furthermore, because the opening portion A is provided in the body cover 7, the gun-type plug 40 is located at a position near to the outer surface of the vehicle during charge. However, according to the above embodiment, the protrusion amount of the gun-type plug 40 which protrudes sideward of the vehicle is suppressed. Therefore, it is prevented from affecting adversely on surrounding during charge. As such, according to this embodiment, it is provided an electric motorcycle in which the charge work is easy and adverse influence of the gun-type plug on the surrounding during charge is reduced.

### (Second embodiment)

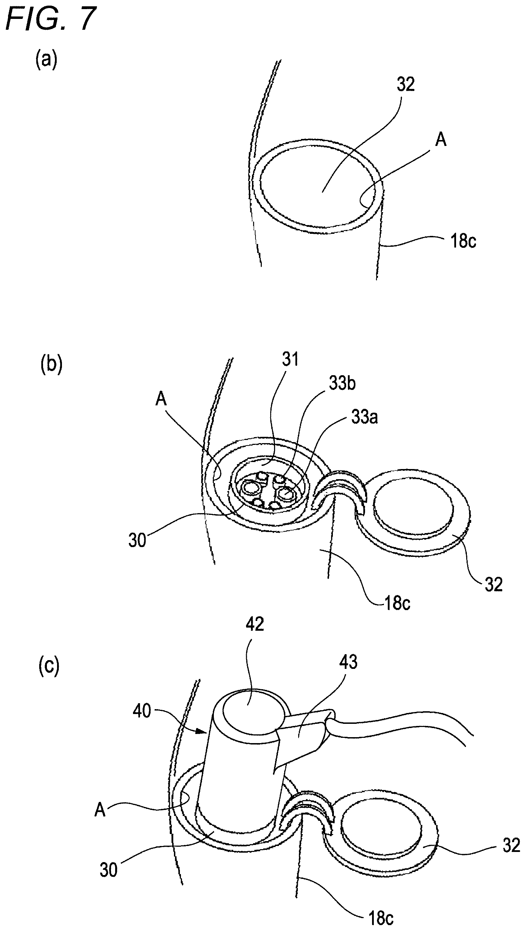

Note that an opening direction of the connecting port 31 of the receptacle 30 may be designed in a manner of a second embodiment shown in Fig. 7. Fig. 7 is an enlarged side view of a receptacle 30 of a straddle-type electric vehicle according to the second embodiment of the invention. (a) of Fig. 7 shows a state in which a cap 32 is closed, (b) shows a state in which the cap 32 is opened and (c) shows a state in which the gun-type plug 40 is connected thereto.

As shown in (a) through (c) of Fig. 7, the connecting port 31 of the receptacle 30 may be opened rearward diagonal upper and slant to leftward. According to this configuration, the user who stands left side of the vehicle and performs charging work can easily recognize the connecting port 31 and can bring the gun-type plug 40 close to the receptacle 30 in a proper posture. Further, the user can insert the gun-type plug 40 into the receptacle 30 easily.

### (Third embodiment)

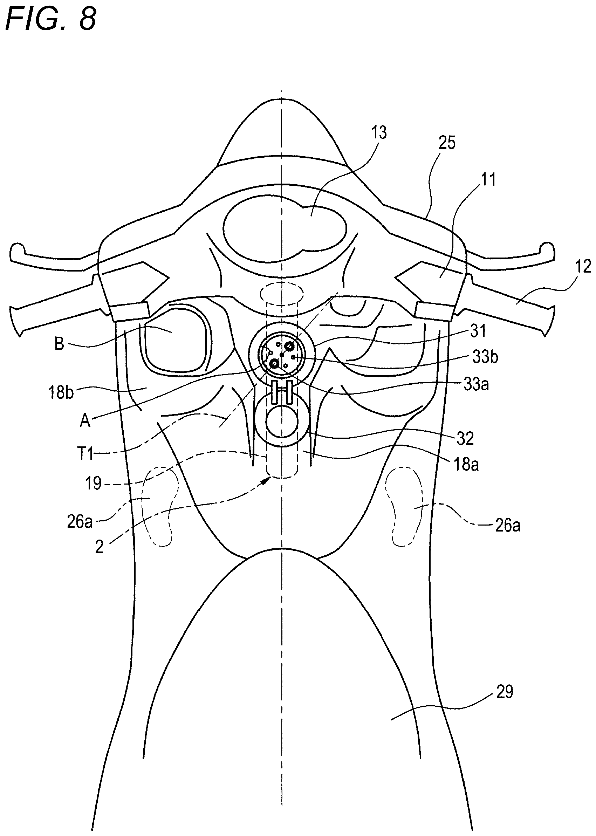

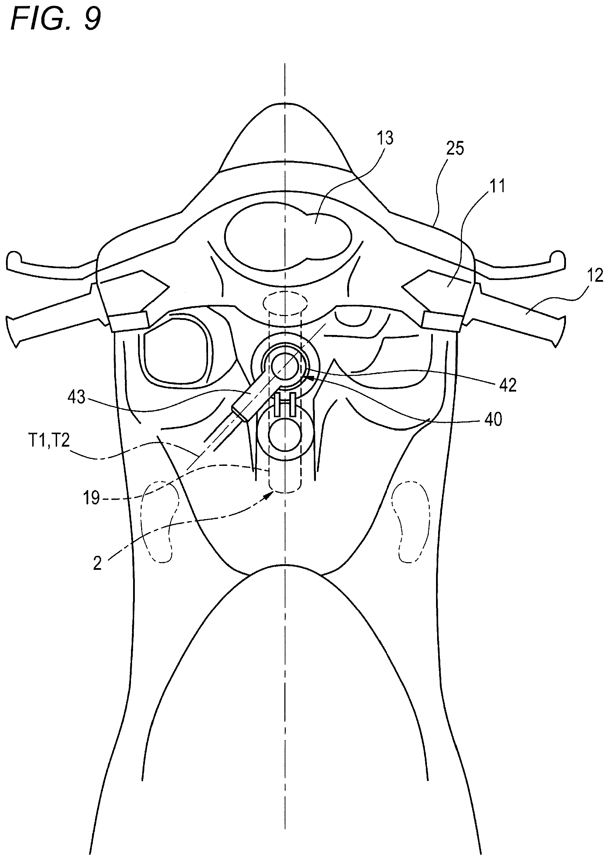

Note that in the above description, an example in which the receptacle 30 is provided leftward of the leg shield 18 is explained, however, the invention is not limited thereto. Fig. 8 is a top view of a straddle-type electric vehicle according to a third embodiment of the invention. Fig. 9 shows a configuration in which the gun-type plug 40 is connected with the receptacle 30 shown in Fig. 8. As shown in Figs. 8 and 9, the receptacle 30 is provided in a frame covering portion 18a of the leg shield 18.

The frame covering portion 18a is positioned between the leg shield 18 and the seat 29 and upward of the foot rest portions (refer to Fig. 1). Further, as shown in Fig. 8, in a plane view, at least a part of the frame covering portion 18a is positioned between the left and right foot rest portions 26a in a width direction of the vehicle. The opening portion A is provided in the frame covering portion 18. For this reason, at least a part (right half) of the receptacle 30 which faces the opening portion A is positioned rightward of a center of the vehicle.

For this reason, the entire of the gun-type plug 40 can be put right aside of the vehicle. Therefore, according to the configuration of this embodiment, the grip portion 43 of the gun-type plug 40 does not protrude sideward of the vehicle more surely. Further, a space which is left side of the leg shield can be used as a small article accommodation space.

### (Fourth not claimed embodiment)

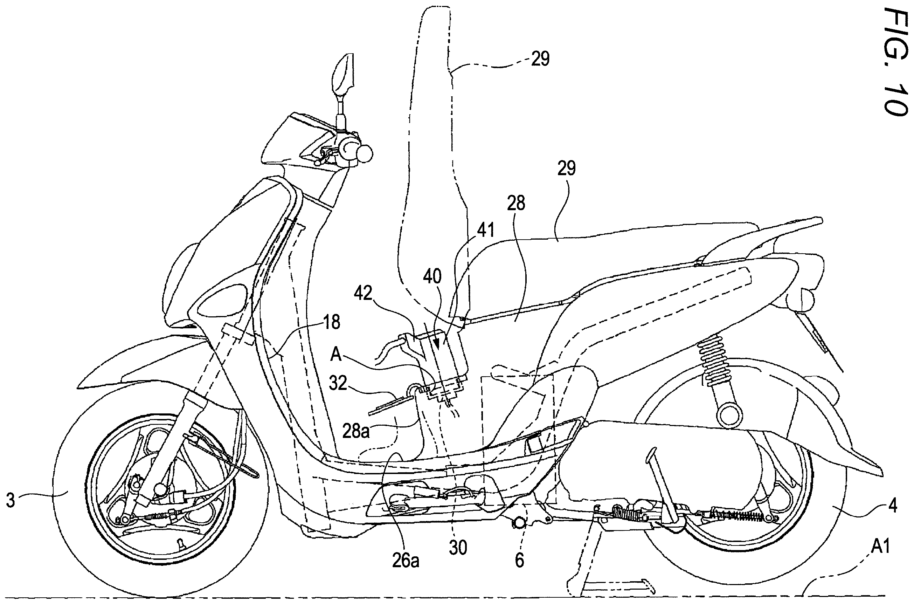

Further, in the first through third embodiments, examples in which the opening portion A to which the connecting port 31 of the receptacle 30 faces is provided in the leg shield 18 are explained. The opening portion A may be provided at a position which is within the width of the leg shield in the left-and-right direction Z1 of the vehicle and between the leg shield 18 and the rear wheel 4 in the front-and-rear direction X1 of the vehicle. Fig. 10 is a side view of a straddle-type electric vehicle according a fourth not claimed embodiment.

As shown in Fig. 10, the opening portion A may be provided in the under-seat cover 28. The under-seat cover 28 of the electric motorcycle according this embodiment is provided with a step portion 28a protruding forward under the seat 29. The opening portion A is provided on a flat upper surface of the step portion 28a.

In this embodiment, too, when the gun-type plug 40 is connected with the receptacle 30, the grip portion 43 of the gun-type plug 40 is positioned forward diagonal left of the plug 42. For this reason, there is no fear in which the gun-type plug 40 interferes with the seat 29, the connecting work is easy. Further, because it is prevented for the gun-type plug 40 from protruding sideward of the vehicle at the time of charging, adverse influence on surrounding can be reduced.

### (Fifth embodiment)

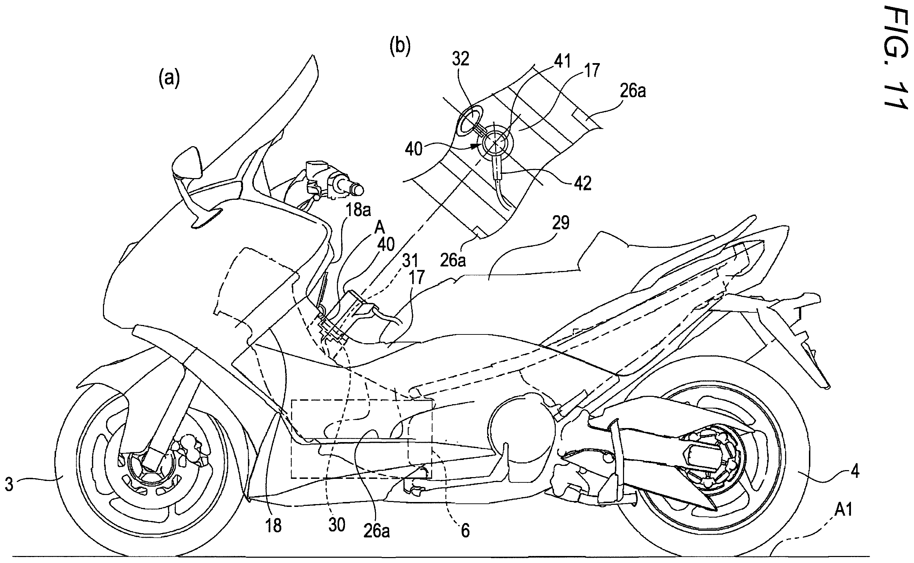

Further, in the above first through fourth embodiments, examples in which the space on which the legs of the occupant is provided forward of the seat 29 are explained, however, the present invention is not limited thereto. Fig. 11 shows an electric vehicle according to a fifth embodiment of the invention, (a) is a side view and (b) is a top view showing the receptacle.

As shown in (a) of Fig. 11, a tunnel portion 17 is provided between the frame covering portion 18a which is provided at a center in a left-and-right direction of the leg shield 18 and the seat 29. The tunnel portion 17 is positioned between the leg shield 18 and the seat 29 and upward of the foot rest portions. Further, as shown in (b) of Fig. 11, in a plane view, at least a part of the tunnel portion 17 is positioned between the left and right foot portions 26a in the width direction of the vehicle. The opening portion A to which the connecting port 31 of the receptacle 30 faces is provided on an upper surface of the tunnel portion 17. The receptacle 30 is provided in an interior of the tunnel portion 17 so that the connecting port 31 opens upward.

As shown in (b) of Fig. 11, the receptacle is provided so that the grip portion 43 is, with respect to the vehicle, positioned leftward of the plug portion 42 when the gun-type plug 40 is connected with the receptacle 30. Note that the tunnel portion 17 is positioned within the width direction of the leg shield 18 in left-and-right direction.

According to this configuration, because the opening portion A is provided at a center of the width direction of the vehicle, when charging the battery 6, it is prevented for the gun-type plug 40 from protruding sideward. Thus, there is no fear in which the gun-type plug 40 is contacted with other vehicles, the adverse influence on the surrounding can be reduced.

Further, in the above first through fifth embodiment, examples in which the board-shaped foot rest portions 26 are formed on the body cover 7, the invention is not limited thereto. For an example, the foot rest portion may be configured by a rod-shaped metal member.

Further, examples in which the connecting port 31 of the receptacle 30 is closable by the cap 32 attached to the receptacle are explained, however, the invention is not limited thereto. A configuration in which the cap is attached to the leg shield 18, the under-seat cover 28 or the tunnel portion 17 on which the opening portion A is provided may be adoptable.

Further, in the above embodiments, examples in which the gun-type plug 40 has seven male terminals 33a, 33b and the receptacle 30 has seven female terminals 41a, 41b are explained, however, the present invention is not limited thereto. For example, it is adoptable a configuration in which the communication lines is designed to have a function of that of the interface line, too, and the gun-type plug 40 has five male terminals 33a, 33b and the receptacle 30 has five female terminals 41a, 41b so that respective five electric wires are connected.

### Industrial Applicability

According to the invention, it is provided a straddle-type electric vehicle in which the gun-type plug can be provided in the space between the left and right foot rest portions and the influence on the surrounding is reduced.

### Description of reference numerals

- 3:: front wheel
- 4:: rear wheel
- 6:: battery
- 17:: tunnel portion
- 18:: leg shield
- 26a:: foot rest portion
- 28a:: stepped portion
- 29:: seat
- A:: opening portion
- 30:: receptacle
- 31:: connecting port
- 40:: gun-type plug
- 42:: plug portion
- 43:: grip portion

## Claims

1. A straddle-type electric vehicle comprising:
a front wheel (3) and a rear wheel (4);
a seat (29) at least part of which is, with respect to the vehicle, provided forward of the rear wheel (4);
a body cover (7) comprising:
a foot rest portion (26a) which is provided between the front wheel (3) and the rear wheel (4) and which supports feet of an occupant who is seated on the seat (29) from therebelow; and
a leg shield (18) which is provided between the foot rest portion (26a) and the front wheel (3) and which has a surface extending in an up-and-down direction; and a receptacle (30) for charging the straddle-type electric vehicle is provided in a position facing an opening portion (A),
wherein the opening portion (A) is provided on the body cover (7) in a position which is within a width of the leg shield (18) in a left-and-right direction of the vehicle and
between the leg shield (18) and the rear wheel (4) in a front-and-rear direction of the vehicle,
the receptacle (30) is provided with a connection port (31),
**characterized in that**
the receptacle (30) having male terminals (33a, 33b) is configured to be connected with a gun-type plug (40) for charging the straddle-type electric vehicle having a plug portion (42) having female terminals (41a, 41b) which are to be connected with the male terminals (33a, 33b) of the receptacle (30) and a grip portion (43) which is used as a handle, so as to be slant with respect to a longitudinal direction of the plug portion (42), a line segment connecting two male terminals (33a) that are made thick with respect to the other male terminals (33b) is defined as a receptacle-side terminal arrange direction (T1), a line segment connecting two female terminals (41a) that are made thick with respect to the other female terminals (41b) is defined as a plug-side terminal arrange direction (T2), wherein the grip portion (43) protrudes from the plug portion (42) in the plug-side terminal arrange direction (T2) and the plug-side terminal arrange direction (T2) matches the receptacle-side terminal arrange direction (T1) when the gun-type plug (40) is inserted to the receptacle (30), and
the receptacle (30) is provided so that the connecting port (31) to which the gun-type plug (40) is inserted faces upward, and
the receptacle (30) is provided so that the receptacle terminal arrange direction (T1) is slant rearward diagonal left with respect to the front-and-rear direction of the vehicle, so that at least a part of the grip portion (43) of the gun-type plug (40) is, with respect to the vehicle, positioned leftward of the plug portion (42) of the gun-type plug (40) when the gun-type plug (40) is inserted to the receptacle (30) to be connected with the receptacle (30).

2. A straddle-type electric vehicle according to claim 1, **characterized in that** the receptacle (30) is provided so that at least a part thereof is positioned rightward of a vehicle center.

3. A straddle-type electric vehicle according to claim 1 or 2, **characterized by** a cover portion (17) which is provided between the leg shield (18) and the seat (29) and upward of the foot rest portion (26a), and at least a part thereof is positioned between left and right foot rest portions (26a) in a width direction of the vehicle in a plan view and the opening portion (A) is provided on the cover portion.

## Patentansprüche

1. Ein Spreiz-Sitz-Typ-Elektro-Fahrzeug, das umfasst:
ein Vorder-Rad (3) und ein Hinter-Rad (4);
einen Sitz (29), von dem zumindest ein Teil, bezogen auf das Fahrzeug, vor dem Hinter-Rad (4) vorgesehen ist;
einer Körper-Abdeckung (7), die umfasst:
einen Fuß-Ablage-Abschnitt (26a), der zwischen dem Vorder-Rad (3) und dem Hinter-Rad (4) vorgesehen ist und der die Füße eines Insassen, der auf dem Sitz (29) sitzt, von unten stützt; und
ein Bein-Schild (18), das zwischen dem Fuß-Ablage-Abschnitt (26a) und dem Vorder-Rad (3) vorgesehen ist und das eine Fläche aufweist, die sich in einer Auf-und-Ab-Richtung erstreckt; und
eine Aufnahme (30) zum Aufladen des Spreiz-Sitz-Typ-Elektro-Fahrzeugs ist in einer Position vorgesehen ist, die einem Öffnungs-Abschnitt (A) zugewandt ist,
wobei der Öffnungs-Abschnitt (A) an der Körper-Abdeckung (7) in einer Position vorgesehen ist, die innerhalb einer Breite des Bein-Schilds (18) in einer Links-Rechts-Richtung des Fahrzeugs und zwischen dem Bein-Schild (18) und dem Hinter-Rad (4) in einer Vorwärts-und-Rückwärts-Richtung des Fahrzeugs liegt,
die Aufnahme (30) ist mit einer Verbindungs-Öffnung (31) vorgesehen,
**dadurch gekennzeichnet, dass**
die Aufnahme (30), die Einsteck-Anschlüsse (33a, 33b) hat, konfiguriert ist, um mit einem Pistolen-Typ-Stecker (40) verbunden zu werden, zum Laden des Spreiz-Sitz-Typ-Elektro-Fahrzeugs, der einen Stecker-Abschnitt (42), der Aufnahme-Anschlüsse (41a, 41b) hat, die mit den Einsteck-Anschlüssen (33a, 33b) der Aufnahme (30) zu verbinden sind, und einem Griff-Abschnitt (43) hat, der als Handgriff verwendet ist, so dass er in Bezug auf eine Längs-Richtung des Stecker-Abschnitts (42) schräg ist,
wobei ein Linien-Segment, das zwei Einsteck-Anschlüsse (33a) verbindet, die in Bezug auf die anderen Einsteck-Anschlüsse (33b) dick gemacht sind, als eine Aufnahme-Seite-Anschluss-Anordnungs-Richtung (T1) definiert ist, ein Linien-Segment, das zwei Aufnahme-Anschlüsse (41a) verbindet, die in Bezug auf die anderen Aufnahme-Anschlüsse (41b) dick gemacht sind, als eine Stecker-Seite-Anschluss-Anordnungs-Richtung (T2) definiert ist, wobei der Griff-Abschnitt (43) von dem Stecker-Abschnitt (42) in der Stecker-Seite-Anschluss-Anordnungs-Richtung (T2) vorsteht und die Stecker-Seite-Anschluss-Anordnungs-Richtung (T2) mit der Aufnahme-Seite-Anschluss-Anordnungs-Richtung (T1) übereinstimmt, wenn der Pistolen-Typ-Stecker (40) in die Aufnahme (30) eingeführt ist, und
die Aufnahme (30) vorgesehen ist, so dass die Verbindungs-Öffnung (31), in die der Pistolen-Typ-Stecker (40) eingesetzt ist, nach oben gewandt ist, und
die Aufnahme (30) vorgesehen ist, so dass die Aufnahme-Seite-Anschluss-Anordnungs-Richtung (T1) schräg nach hinten diagonal links in Bezug auf die Vorwärts-und-Rückwärts-Richtung des Fahrzeugs ist, so dass zumindest ein Teil des Griff-Abschnitts (43) des Pistolen-Typ-Steckers (40) in Bezug auf das Fahrzeug links von dem Stecker-Abschnitt (42) des Pistolen-Typ-Steckers (40) positioniert ist, wenn der Pistolen-Typ-Stecker (40) in die Aufnahme (30) eingesetzt ist, um mit der Aufnahme (30) verbunden zu werden.

2. Ein Spreiz-Sitz-Typ-Elektro-Fahrzeug nach Anspruch 1, **dadurch gekennzeichnet, dass** die Aufnahme (30) vorgesehen ist, so dass zumindest ein Teil davon rechts von einer Fahrzeug-Mitte angeordnet ist.

3. Ein Spreiz-Sitz-Typ-Elektro-Fahrzeug nach Anspruch 1 oder 2, **gekennzeichnet durch** einen Abdeck-Abschnitt (17), der zwischen dem Bein-Schild (18) und dem Sitz (29) und oberhalb des Fuß-Ablage-Abschnitts (26a) vorgesehen ist, und von dem zumindest ein Teil in einer Draufsicht in Breiten-Richtung des Fahrzeugs zwischen dem linken und dem rechten Fuß-Ablage-Abschnitt (26a) angeordnet ist und der Öffnungs-Abschnitt (A) ist an dem Abdeck-Abschnitt vorgesehen.

## Revendications

1. Véhicule électrique à selle comprenant :
une roue avant (3) et une roue arrière (4),
un siège (29) dont au moins une partie est disposée à l'avant de la roue arrière (4), par rapport au véhicule,
un carénage (7) comprenant :
un repose pieds (26a) qui est disposé entre la roue avant (3) et la roue arrière (4) et qui supporte par en dessous les pieds de l'occupant qui est assis sur le siège (29), et
un protège jambes (18) qui est disposé entre le repose pieds (26a) et la roue avant (3) et qui présente une surface qui s'étend dans la direction haut bas, et
un logement (30) permettant de charger le véhicule électrique à selle est prévu à une position faisant face à une ouverture (A),
dans lequel l'ouverture (A) est disposée sur le carénage (7) dans une position se trouvant à l'intérieur de la largeur du protège jambes (18) dans la direction gauche droite du véhicule et entre le protège jambes (18) et la roue arrière (4) dans la direction avant arrière du véhicule,
le logement (30) étant doté d'un port de connexion (31),
**caractérisé en ce que :**
le logement (30), qui possède des bornes mâles (33a, 33b), est configuré pour être connecté avec une fiche de type pistolet (40) pour charger le véhicule électrique à selle comportant une fiche (42) qui possède des bornes femelles (41a, 41b) qui doivent être connectées avec les bornes mâles (33a, 33b) du logement (30), ainsi qu'une poignée (43) qui est utilisée comme prise, de sorte à être inclinée par rapport à la direction longitudinale de la fiche (42) ; un segment de droite, reliant deux bornes mâles (33a) rendues épaisses par rapport aux autres bornes mâles (33b), est défini comme direction d'agencement de bornes du côté logement (T1) ; un segment de droite, reliant deux bornes femelles (41a) rendues épaisses par rapport aux autres bornes femelles (41b) est défini comme direction d'agencement de bornes du côté fiche (T2) ; la poignée (43) faisant saillie de la fiche (42) dans la direction d'agencement de bornes du côté fiche (T2) et la direction d'agencement de bornes du côté fiche (T2) correspondant à la direction d'agencement de bornes du côté logement (T1) lorsque la fiche de type pistolet (40) est insérée dans le logement (30), et
le logement (30) est disposé de sorte à ce que le port de connexion (31) sur lequel est inséré la fiche de type pistolet (40) fasse face vers le haut, et
le logement (30) est disposé de sorte à ce que la direction d'agencement de bornes du côté logement (T1) soit inclinée vers l'arrière diagonal gauche par rapport à la direction avant arrière du véhicule de sorte à ce qu'au moins une partie de la poignée (43) de la fiche de type pistolet (40) soit positionnée en direction de la gauche de la partie fiche (42) de la fiche de type pistolet (40), par rapport au véhicule, lorsque la fiche de type pistolet (40) est insérée dans le logement (30) pour être connectée avec le logement (30) .

2. Véhicule électrique à selle selon la revendication 1, **caractérisé en ce que** le logement (30) est prévue de sorte à ce qu'au moins une partie de celui-ci soit positionnée vers la droite du centre du véhicule.

3. Véhicule électrique à selle selon la revendication 1 ou la revendication 2, **caractérisé par** une partie de carénage (17) qui est disposée entre le protège jambes (18) et le siège (29) et en haut du repose pieds (26a), et au moins une partie de celle-ci est positionnée entre les parties gauche et droite de repose pieds (26a) dans la direction de la largeur du véhicule dans une vue en plan, et l'ouverture (A) est disposée sur la partie de carénage.
